(19) **Europäisches Patentamt / European Patent Office / Office européen des brevets**

(11) **EP 4 419 878 B1**

(12) **FASCICULE DE BREVET EUROPEEN**

(45) Date de publication et mention de la délivrance du brevet:
**10.09.2025 Bulletin 2025/37**

(21) Numéro de dépôt: **22803014.4**

(22) Date de dépôt: **19.10.2022**

(51) Classification Internationale des Brevets (IPC):
**G01L 11/00** (2006.01)     **B64F 5/60** (2017.01)
**G01K 3/06** (2006.01)      **G01L 17/00** (2006.01)
**B60C 23/04** (2006.01)     **B64C 25/36** (2006.01)
**G01K 1/02** (2021.01)

(52) Classification Coopérative des Brevets (CPC):
**G01L 17/00; B60C 23/0476; B64C 25/36; B64F 5/60; G01K 1/026; G01K 3/06; G01L 11/002**

(86) Numéro de dépôt international:
**PCT/EP2022/079115**

(87) Numéro de publication internationale:
**WO 2023/067010 (27.04.2023 Gazette 2023/17)**

(54) **PROCEDE ET SYSTEME DE DETERMINATION DE LA PRESSION D'UN PNEUMATIQUE D'AERONEF**

VERFAHREN UND SYSTEM ZUR BESTIMMUNG DES DRUCKS EINES FLUGZEUGREIFENS

METHOD AND SYSTEM FOR DETERMINING THE PRESSURE OF AN AIRCRAFT TYRE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **21.10.2021 FR 2111157**

(43) Date de publication de la demande:
**28.08.2024 Bulletin 2024/35**

(73) Titulaires:
• **COMPAGNIE GENERALE DES ETABLISSEMENTS MICHELIN**
  **63000 Clermont-Ferrand (FR)**
• **SAFRAN**
  **75015 Paris (FR)**

• **Safran Electronics & Defense**
  **92100 Boulogne-Billancourt (FR)**
• **Safran Landing Systems**
  **78140 Vélizy-Villacoublay (FR)**

(72) Inventeur: **NEBA, Eric Carin**
**63040 Clermont-Ferrand Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
WO-A1-2009/036547     WO-A1-2019/081746
US-A1- 2005 162 263     US-A1- 2006 042 366
US-A1- 2007 217 478     US-A1- 2012 116 694

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention se situe dans le domaine de l'aéronautique, et plus particulièrement dans le domaine de l'entretien et de la maintenance des pneumatiques aéronef. De manière plus précise, l'invention concerne le suivi de la pression de pneumatiques aéronef.

On sait qu'un mauvais gonflage de pneumatiques avion peut engendrer de nombreux problèmes. Ainsi, un surgonflage peut conduire à une dégradation de la bande de roulement, soit par une usure irrégulière, ou en la rendant plus sensible aux altérations mécaniques. A l'inverse, un sous-gonflage augmente considérablement les contraintes et l'échauffement dans le pneu, ce qui peut réduire la durée de vie du pneu, voire générer des risques sécuritaires tel qu'un éclatement du pneumatique ou un déchapage

Pour remédier à cette situation, il est préconisé par les pneumaticiens d'effectuer un contrôle journalier de la pression des pneumatiques. Il est en outre généralement précisé de toujours effectuer ce contrôle lorsque les pneus sont froids, c'est-à-dire lorsque la température interne des pneus est sensiblement égale à la température ambiante. Il est également déconseillé de dégonfler un pneumatique chaud.

On connaît ainsi des documents comportant des recommandations pour le gonflage à froid des pneumatiques avion, et les pressions de consigne (Pc) à appliquer en fonction du type de pneus, de leurs dimensions, et éventuellement de la charge de l'avion. Ces documents indiquent également des préconisations de maintenance de pression, en fonction des écarts à Pc.

En outre, les documentations techniques fournies par les avionneurs indiquent des procédures à suivre pour le contrôle de pression. Ces procédures indiquent que le contrôle de pression devant être effectué à froid, il convient d'attendre trois heures après l'arrêt de l'appareil pour effectuer les mesures.

Toutefois, on a constaté qu'une telle procédure présentait deux inconvénients majeurs. Le premier est l'incertitude associée à cette mesure. En effet, on a constaté que la température au sein du pneumatique était inhomogène, avec des variations pouvant aller jusqu'à quarante degrés Celsius. En outre, l'écart entre la température interne et la température ambiante au bout de 3h peut aller jusqu'à quinze degrés Celsius, puisqu'il s'avère qu'en réalité la durée nécessaire à un refroidissement complet du pneumatique est plutôt de l'ordre de cinq heures. Ceci conduit à des erreurs pouvant aller jusqu'à onze PSI (soit 0.76 bars) d'écart entre la pression déterminée et la pression réelle à froid.

Le second inconvénient majeur est le temps d'immobilisation de l'avion, qui empêche les compagnies de pouvoir augmenter le rythme de rotation de leurs appareils.

Le document WO2019/081746 A1 décrit une méthode pour mesurer la pression d'un pneumatique d'aéronef en déterminant une pression à froid en fonction d'une mesure de pression et de température.

La présente invention vise donc à remédier à ces inconvénients en proposant un procédé et un système de détermination de la pression à froid d'un pneumatique en fonction de mesures effectuées à chaud.

A cet effet, il apparaît nécessaire de connaître la fonction de transfert entre un pneumatique chaud et un pneumatique froid.

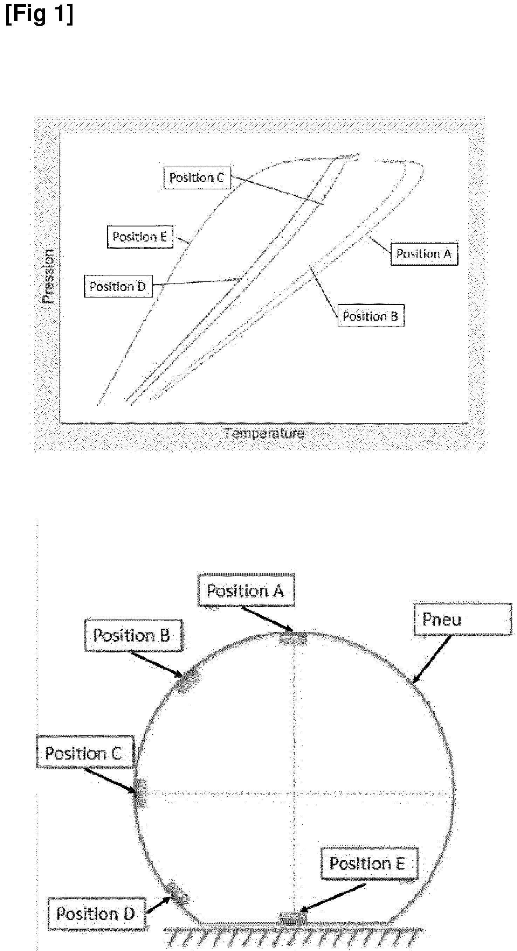

Or, on a constaté de manière surprenante que cette fonction de transfert n'était pas identique dans l'ensemble du pneumatique. Ainsi, selon la position du capteur au moment où sont effectuées les mesures, les résultats peuvent être faussés. En effet, lors de l'arrêt du véhicule, l'air chaud présent dans le pneumatique ayant tendance à monter, la température dans le bas du pneumatique sera inférieure à la température dans le haut du pneumatique. Les inventeurs ont donc effectué de nombreuses mesures afin de construire les abaques présentes en figure 1. Ces abaques montrent la fonction de transfert température/pression dans un pneumatique en fonction de la position du capteur dans le pneumatique lors de la mesure, les différentes positions étant montrées sur le second schéma de la figure 1.

Partant de ces recherches, les inventeurs ont ainsi pu proposer des solutions permettant de limiter l'incertitude due à ce positionnement du capteur.

Ainsi, la présente invention concerne un procédé de détermination de la pression dans un pneumatique d'aéronef monté, comportant les étapes suivantes :

- une étape au cours de laquelle on mesure, avec un premier capteur installé dans le pneumatique, une première température de gaz interne à une première position dans le pneumatique,

- une étape au cours de laquelle on mesure, avec un second capteur installé dans le pneumatique, une seconde température de gaz interne à une deuxième position dans le pneumatique, la première et la seconde position étant séparées d'une distance angulaire comprise entre 160 et 200 degrés,

- une étape au cours de laquelle on détermine, en fonction de la première et seconde température, une température « retenue »,

- une étape au cours de laquelle on détermine une pression de l'air interne du pneumatique,

- une étape au cours de laquelle on détermine, en fonction de la température retenue, en fonction de la pression et en fonction d'une fonction de transfert prédéterminée, une pression à froid du pneumatique.

Ce procédé est destiné à être mis en œuvre peu après l'arrêt du véhicule, et la pression mesurée est donc dite « à chaud ». On parlera de pression « à froid » pour désigner la pression de référence généralement utilisée dans les recommandations des avionneurs, et qui est une pression mesurée lorsque la température à l'intérieur du pneumatique est sensiblement égale à la température ambiante.

Dans un mode de réalisation particulier, l'étape de détermination d'une pression du gaz de gonflage du pneumatique comprend une étape de mesure de pression avec un capteur de pression installé dans le pneumatique, ou une étape d'obtention d'une pression déterminée par un dispositif extérieur au pneumatique.

Dans un mode de réalisation particulier, la détermination de la température retenue est effectuée en choisissant la température la plus élevée entre la première et seconde température, ou en effectuant la moyenne de la première et seconde température.

Dans un mode de réalisation particulier, un procédé selon l'invention comprend en outre l'étape de déterminer l'altitude du capteur ayant mesuré la température la plus élevée, et dans lequel l'étape de détermination de la pression à froid du pneumatique prend en compte cette altitude.

L'invention concerne également un système de détermination de la pression dans un pneumatique d'aéronef monté, le système comportant

- au moins deux capteurs de température installés à l'intérieur du pneumatique, les capteurs étant positionnés de manière que la distance angulaire entre les deux capteurs soit comprise entre 160 et 200 degrés,

- chacun des capteurs est posé préférentiellement entre 80° et 100° par rapport à la direction de roulage,

- un moyen de détermination de la pression à l'intérieur du pneumatique,

- des moyens de calcul permettant de déterminer, en fonction d'une température et d'une pression, une pression à froid du pneumatique.

Dans un mode de réalisation particulier, le moyen de détermination de la pression est compris dans le groupe comprenant : un capteur de pression installé dans le pneumatique, un capteur de pression installé sur la jante associée, ou un dispositif de mesure externe tel qu'un manomètre.

Dans un mode de réalisation particulier, les capteurs de température comprennent des accéléromètres permettant de déterminer l'altitude du capteur.

Dans un mode de réalisation particulier, un système selon l'invention comprend en outre des moyens de détermination de la température du frein associé au pneumatique.

Nous allons maintenant décrire différents exemples de réalisation de l'invention. On précise ici que ces exemples décriront à la fois un procédé selon l'invention, mais également des éléments constitutifs d'un système selon l'invention.

Ainsi, un exemple de système complet permettant la mise ne œuvre de l'ensemble des modes de réalisation de la présente invention comporte les éléments suivants :

- au moins deux capteurs de températures installés dans le pneumatique,
- un appareil mobile, qui peut prendre la forme d'un téléphone portable ou d'un lecteur de tout type, comportant des moyens de lecture des mesures effectuées par les capteurs, et des moyens de transmission de ces mesures à des moyens de calcul,
- des moyens de calcul, installés soit dans l'appareil mobile, soit sur un serveur distant, et dans ce cas l'appareil mobile comprend des moyens aptes à permettre l'échange de données entre l'appareil mobile et le serveur distant,
- avantageusement, une interface utilisateur permettant à un opérateur de consulter des données sur l'appareil mobile, ou d'entrer certaines données nécessaires à la mise en œuvre d'un procédé selon l'invention (par exemple des données concernant la température ambiante, une pression du pneumatique, une température de frein ...)

En outre, un système selon certains modes de réalisation de l'invention peut comprendre optionnellement :

- des accéléromètres installés dans les capteurs de température,
- des moyens de détermination de la pression dans le pneumatique.

Dans un premier exemple de réalisation, on utilise un système comportant deux capteurs de température accrochés sur la gomme intérieure d'un pneumatique monté. Ces deux capteurs sont situés de manière diamétralement opposée l'un par rapport à l'autre. Ainsi, lorsque le véhicule est à l'arrêt, et que le pneumatique n'a donc plus de mouvement de rotation par rapport au sol, on a la garantie d'avoir un capteur situé dans la partie haute du pneumatique, à savoir au-dessus d'un diamètre horizontal du pneumatique, et un capteur situé dans la partie basse du pneumatique.

Les deux capteurs effectuent une mesure de la température à l'intérieur du pneumatique. De manière avantageuse, les capteurs sont munis de moyens de communication sans fil leur permettant de communiquer avec un appareil mobile sur lequel est installé une application développée spécifiquement pour la mise en œuvre de l'invention.

Ainsi, l'appareil mobile peut lire les valeurs des mesures effectuées par le capteur. Selon les modes de réalisation, la mise en œuvre du procédé peut se poursuivre directement au niveau de l'appareil mobile, muni de moyens de calculs ou de stockage, ou alors dans un serveur déporté avec lequel l'appareil mobile communique.

Lorsque les températures mesurées par les deux capteurs sont connues, un procédé selon l'invention comprend l'étape de déterminer une température retenue pour la suite du calcul ; Deux options sont possibles : dans un exemple, la température retenue est la température la plus élevée. En effet, la température la plus élevée est issue du capteur situé dans la partie haute du pneumatique, et on a constaté que dans la partie haute du pneumatique, la fonction de transfert entre pneu chaud et pneu froid varie peu et est indépendante de la température ou de l'énergie de freinage.

Dans un autre exemple, utilisé avantageusement dans le cas où les deux capteurs sont sensiblement situés à la même hauteur, on peut effectuer une moyenne des deux valeurs mesurées pour déterminer la valeur retenue.

On peut envisager différentes manières de mettre en œuvre cette détermination de température retenue :

- soit on utilise systématiquement l'une ou l'autre des options énoncées ci-dessus, quelle que soit la situation,
- soit on détermine la méthode à utiliser en fonction de critères de choix : par exemple si on détermine que l'écart entre les deux températures mesurées est inférieure à une certaine valeur, par exemple 2°C avec une précision de +/- 1°C de la mesure de température, ou si on détermine que la différence d'altitude entre les deux capteurs est inférieure à une certaine valeur, par exemple 5 mm dans ce cas on choisit d'effectuer la moyenne, et dans les autres cas on utilise la méthode du maximum.

Une fois la température retenue déterminée, et en connaissant la pression du pneumatique à l'instant de la prise de température, on peut alors déterminer la pression dans le pneu à froid en utilisant la formule suivante : P_froid=Pmesurée -A*(Tretenue-Tambiante), dans laquelle A est une constante dépendant des caractéristiques des capteurs et du pneu. La mesure de pression peut être effectuée par tout moyen décrit dans le présent document.

On précise ici que l'utilisation de deux capteurs présente d'autres avantages, par rapport aux systèmes existants :

- d'une part, on effectue deux mesures de température, ce qui signifie que même en cas d'avarie d'un capteur, il est toujours possible de déterminer une pression à froid ; à cet effet, dans un exemple de réalisation, un procédé selon l'invention prévoit que dans le cas où une mesure de température est absente, la température retenue est égale à l'unique température mesurée,
- d'autre part, le fait de positionner deux capteurs diamétralement opposés permet de mieux équilibrer le pneumatique, et d'éviter les phénomènes de balourds qui engendrent une usure prématurée ou des risques de défaillance.

Enfin, il est également possible d'envisager le cas où un opérateur, devant interroger les capteurs de température, se contente d'interroger le capteur situé dans la partie haute du pneumatique, plus accessible que le capteur situé dans la partie inférieure, voire dans la zone d'aire de contact du pneumatique sur le sol, ce qui le rend difficilement accessible. Dans ce cas, le capteur inférieur, qui ne ferait pas l'objet d'une interrogation, pourrait être assimilé à un capteur défaillant.

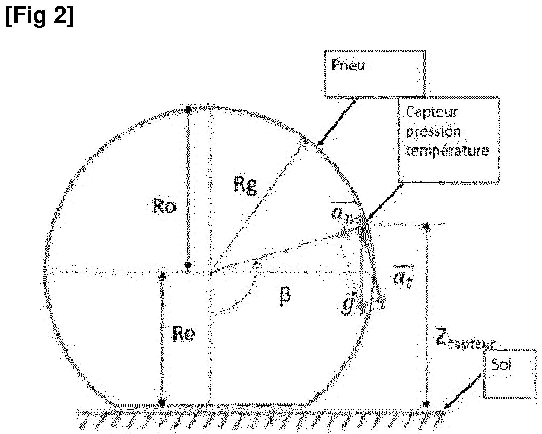

Nous allons maintenant décrire un second exemple de réalisation de l'invention. Dans cet exemple, décrit à l'aide de la figure 2, on utilise des capteurs de température également munis d'accéléromètre 3 axes. L'accéléromètre est implanté sur le capteur ou à proximité, de sorte que ces axes $(\overrightarrow{xc}, \overrightarrow{yc}, \overrightarrow{zc})$ correspondent aux repères cylindriques $(\vec{n}, \vec{y}, \vec{t})$ du pneumatique. Cela permet de connaître l'altitude de l'accéléromètre et donc du capteur en commençant par déterminer l'azimut β, à partir des accélérations mesurées suivant l'axe normal et l'axe tangentiel de l'accéléromètre, qui sont des composantes de l'accélération de pesanteur, en utilisant la formule suivante : $\beta = \frac{\pi}{2} + \mathrm{atan}\left(\frac{a_n}{a_t}\right)$

Connaissant cet azimut, on peut ensuite calculer l'altitude précise Zcapteur de deux façons :

- Soit avec le rayon écrasé Re et le rayon gonflé Rg du pneumatique : $Z_{catpeur} = Re + Rg * sin\beta$
- soit avec une loi préétablie Z_capteur (β) pour tenir compte de « l'ovalisation » du pneu avec l'écrasement, car le rayon Rg varie suivant l'angle β.

Dans ce mode de réalisation, la pression à froid du pneumatique est déterminée en tenant compte de l'altitude du capteur dont la mesure de température a été retenue, en utilisant la formule suivante : $P_{froid}$ = Pm - (B * $Z_{capteur}$ + C) * (*Tretenue - Tamb*) où B et C sont des constantes, dépendantes des caractéristiques du capteur et du pneu.

Dans un troisième exemple de réalisation, un procédé selon l'invention prend en compte un paramètre additionnel pour la détermination de la pression à froid, à savoir la température de frein. En effet, on a constaté que, en particulier lorsqu'un capteur de température se situe dans la partie inférieure du pneumatique, proche de l'aire de contact, la dynamique de refroidissement dépend de la température de frein. Ainsi, la prise en compte de cette température permet d'améliorer la précision d'un procédé selon l'invention.

Cette température de frein peut être obtenue de différentes façons :

- elle peut être reçue directement de l'avion, par exemple par une connexion sans fil entre l'appareil mobile et des moyens de télécommunications installés dans l'avion,
- elle peut être saisie directement sur l'appareil mobile par un opérateur en charge de la maintenance de l'appareil,
- elle peut être estimée par les moyens de calcul en fonction de certaines grandeurs d'usage de l'avion, par exemple en utilisant la formule suivante :

$$Tfrein = AT * W_{frein}^2 + BT * W_{frein} + CT$$

avec :

$$\begin{cases} W_{frein} = \int_{freinage} \left( Ma * ax - \left( F_{poussée}(1 - R * ActivREv) + Faéro \right) \right) * dD \\ Faéro = -\frac{1}{2} * \rho * S * C_x^0 * V^2 \\ C_x^0 = \frac{Ma * ax^0}{\frac{1}{2} * \rho * S * V_0^2} \end{cases}$$

Où : Ma : la masse avion à l'atterrissage,

- ax : l'accélération longitudinale,
- Fpoussée : désigne la poussée des moteurs,
- ActivRev : l'indicateur de l'ouverture des portes du système de reverse : 0 si ouvertes, 1 si fermées,
- R : le ratio de poussée dirigée vers l'avant de l'avion,
- Faéro : la trainée aérodynamique,
- D : la distance parcourue,
- Cx : le coefficient de trainée,
- S : surface maitre-couple de voilure,
- ρ : la masse volumique de l'air,
- V : vitesse avion / V0 vitesse à l'atterrissage
- AT, BT et CT sont des constantes dépendantes des caractéristiques du frein et de l'avion.

Dans les exemples de réalisation décrits jusqu'ici, on considère que les mesures de température sont effectuées peu après l'arrêt de l'avion, c'est-à-dire dans un délai de 15 min à 2 h suivant cet arrêt.

Dans ce quatrième exemple de réalisation, nous allons décrire une manière avantageuse de déterminer la pression à froid, quel que soit le moment auquel les mesures de température sont effectuées.

Pour ce faire, à partir de l'estimation de la température au début du stationnement Tstop, on estime le temps à partir de l'arrêt du pneu pendant lequel la pression est susceptible d'augmenter dtMaxStrat, et l'augmentation de Pression dPMaxStrat, du fait des échanges thermiques avec le frein.

On connaît le temps dt qui s'est écoulé depuis l'arrêt du pneu, à partir de la composante 3 de la solution :
Si dt > dtMaxStrat : la pression du gaz de gonflage diminue, en suivant une loi exponentielle décroissante, qui permet d'estimer la pression du pneumatique au bout d'un certain temps dt à partir de l'instant courant telle que :

$$P(tm + dt) = \left( Pm - P_{froid} \right) * \exp\left( \frac{dt}{\tau} \right) + P_{froid}$$

Où:

- la constante de temps τ dépend des caractéristiques du pneumatique,
- Pfroid est la pression à froid estimée,
- tm est l'instant de mesure courant,
- Pm : pression mesurée à l'instant courant
- dt : temps écoulé depuis l'instant tm

On peut aussi estimer le temps dtFroid, à partir de l'instant courant, au bout duquel la pression atteindra Pfroid+εP, εP étant la précision de mesure souhaitée, soit :

$$dtFroid = \frac{\ln\left(\frac{\varepsilon P}{Pm - P_{froid}}\right)}{\tau}$$

Si dt < dtMaxStrat : la pression du gaz augmente plus ou moins rapidement pendant dtMaxStrat, en fonction de la température Tstop au début du stationnement. Puis l'évolution de la pression suit une loi exponentielle décroissante à partir de tMaxStrat, ce qui permet d'estimer la pression du pneu au bout d'un certain temps dt (=tMaxSrat-tm+dt') à partir de l'instant courant tm :

$$P(dt) = \left(Pmax - P_{froid}\right) * \exp\left(\frac{dt - (tMaxStrat - tm)}{\tau}\right) + P_{froid}$$

Où Pmax : la pression maximale pendant le stationnement mesurée à tMaxStrat,

On peut également estimer le temps dtFroid, à partir de l'instant courant, au bout duquel la pression atteindra Pfroid+εP, εP étant la précision de mesure souhaitée, soit :

$$dtFroid = \frac{\ln\left(\frac{\varepsilon P}{Pmax - P_{froid}}\right)}{\tau} + (tMaxStrat - tm)$$

**Revendications**

1. Procédé de détermination de la pression dans un pneumatique d'aéronef monté, comportant les étapes suivantes :

   - une étape au cours de laquelle on mesure, avec un premier capteur installé dans le pneumatique, une première température de gaz interne à une première position dans le pneumatique, le procédé étant **caractérisé en ce qu'**il comporte les étapes suivantes:
   - une étape au cours de laquelle on mesure, avec un second capteur installé dans le pneumatique, une seconde température de gaz interne à une deuxième position dans le pneumatique, la première et la seconde position étant séparées d'une distance angulaire comprise entre 160 et 200 degrés,
   - une étape au cours de laquelle on détermine, en fonction de la première et seconde température, une température « retenue »,
   - Une étape au cours de laquelle on détermine une pression de l'air interne du pneumatique,

   - une étape au cours de laquelle on détermine, en fonction de la température retenue, en fonction de la pression et en fonction d'une fonction de transfert prédéterminée, une pression à froid du pneumatique.

2. Procédé de détermination selon la revendication 1, dans lequel l'étape de détermination d'une pression de l'air interne du pneumatique comprend une étape de mesure de pression avec un capteur de pression installé dans le pneumatique, ou une étape d'obtention d'une pression déterminée par un dispositif extérieur au pneumatique.

3. Procédé de détermination selon la revendication 1, dans lequel la détermination de la température retenue est effectuée en choisissant la température la plus élevée entre la première et seconde température, ou en effectuant la moyenne de la première et seconde température.

4. Procédé de détermination selon l'une des revendications précédentes, comprenant en outre l'étape de déterminer l'altitude du capteur ayant mesuré la température la plus élevée, et dans lequel l'étape de détermination de la pression à froid du pneumatique prend en compte cette altitude.

**5.** Système de détermination de la pression dans un pneumatique d'aéronef monté, le système comportant

- au moins deux capteurs de température installés à l'intérieur du pneumatique, les capteurs étant positionnés de manière à ce que la distance angulaire entre les deux capteurs soit comprise entre 160 et 200 degrés,
- Un moyen de détermination de la pression à l'intérieur du pneumatique,
- Des moyens de calcul permettant de déterminer, en fonction d'une température et d'une pression, une pression à froid du pneumatique.

**6.** Système de détermination selon la revendication 5, dans lequel le moyen de détermination de la pression est compris dans le groupe comprenant : un capteur de pression installé dans le pneumatique, un capteur de pression installé sur la jante associée, ou un dispositif de mesure externe tel qu'un manomètre.

**7.** Système de détermination selon la revendication 5 ou 6, dans lequel les capteurs de température comprennent des accéléromètres permettant de déterminer l'altitude du capteur.

**8.** Système de détermination selon l'une des revendications 5 à 7, comprenant en outre des moyens de détermination de la température du frein associé au pneumatique.


**Patentansprüche**

**1.** Verfahren zur Bestimmung des Drucks in einem montierten Flugzeugreifen, das die folgenden Schritte umfasst:

- einen Schritt, während dessen mit einem ersten Sensor, der in dem Reifen installiert ist, eine erste Innengastemperatur an einer ersten Position in dem Reifen gemessen wird, wobei das Verfahren **dadurch gekennzeichnet ist, dass** es die folgenden Schritte umfasst:
- einen Schritt, während dessen mit einem zweiten Sensor, der in dem Reifen installiert ist, eine zweite Innengastemperatur an einer zweiten Position in dem Reifen gemessen wird, wobei die erste und die zweite Position um einen Winkelabstand zwischen 160 und 200 Grad voneinander entfernt sind,
- einen Schritt, während dessen in Abhängigkeit von der ersten und der zweiten Temperatur eine "übernommene" Temperatur bestimmt wird,
- einen Schritt, während dessen ein Druck der Innenluft des Reifens bestimmt wird,
- einen Schritt, während dessen in Abhängigkeit von der übernommenen Temperatur, in Abhängigkeit von dem Druck und in Abhängigkeit von einer vorbestimmten Übertragungsfunktion ein Druck im kalten Zustand des Reifens bestimmt wird.

**2.** Bestimmungsverfahren nach Anspruch 1, wobei der Schritt des Bestimmens eines Drucks der Innenluft des Reifens einen Schritt des Messens eines Drucks mit einem in dem Reifen installierten Drucksensor oder einen Schritt des Erhaltens eines Drucks, der durch eine Vorrichtung außerhalb des Reifens bestimmt wird, beinhaltet.

**3.** Bestimmungsverfahren nach Anspruch 1, wobei das Bestimmen der übernommenen Temperatur durchgeführt wird, indem die höchste Temperatur von der ersten und der zweiten Temperatur gewählt wird oder indem der Mittelwert der ersten und der zweiten Temperatur gebildet wird.

**4.** Bestimmungsverfahren nach einem der vorhergehenden Ansprüche, ferner beinhaltend den Schritt des Bestimmens der Höhe des Sensors, der die höchste Temperatur gemessen hat, und wobei der Schritt des Bestimmens des Drucks im kalten Zustand des Reifens diese Höhe berücksichtigt.

**5.** System zur Bestimmung des Drucks in einem montierten Flugzeugreifen, wobei das System Folgendes umfasst:

- mindestens zwei Temperatursensoren, die im Inneren des Reifens installiert sind, wobei die Sensoren so positioniert sind, dass der Winkelabstand zwischen den zwei Sensoren zwischen 160 und 200 Grad beträgt,
- ein Mittel zur Bestimmung des Drucks im Inneren des Reifens,
- Rechenmittel, die es gestatten, in Abhängigkeit von einer Temperatur und einem Druck einen Druck im kalten Zustand des Reifens zu bestimmen.

**6.** Bestimmungssystem nach Anspruch 5, wobei das Mittel zur Bestimmung des Drucks in der Gruppe enthalten ist, die Folgendes beinhaltet: einen im Reifen installierten Drucksensor, einen an der assoziierten Felge installierten Drucksensor oder eine externe Messvorrichtung, wie etwa ein Manometer.

7. Bestimmungssystem nach Anspruch 5 oder 6, wobei die Temperatursensoren Beschleunigungsmesser beinhalten, die eine Bestimmung der Höhe des Sensors gestatten.

8. Bestimmungssystem nach einem der Ansprüche 5 bis 7, ferner beinhaltend Mittel zur Bestimmung der Temperatur der mit dem Reifen assoziierten Bremse.

**Claims**

1. Method for determining the pressure in a mounted aircraft tyre, involving the following steps:

   - a step during which a first internal gas temperature is measured at a first position in the tyre, with a first sensor installed in the tyre, the method being **characterized in that** it comprises the following steps:
   - a step during which a second internal gas temperature is measured at a second position in the tyre, with a second sensor installed in the tyre, the first and the second positions being separated by an angular distance of between 160 and 200 degrees,
   - a step during which a "retained" temperature is determined, as a function of the first and second temperatures,

     - a step during which a pressure of the internal air of the tyre is determined,
     - a step during which a cold pressure of the tyre is determined, as a function of the retained temperature, as a function of the pressure and as a function of a predetermined transfer function.

2. Determination method according to Claim 1, wherein the step of determining a pressure of the internal air of the tyre comprises a step of measuring pressure with a pressure sensor installed in the tyre, or a step of obtaining a pressure determined by a device outside the tyre.

3. Determination method according to Claim 1, wherein the retained temperature is determined by selecting the highest temperature out of the first and second temperatures, or by averaging the first and second temperatures.

4. Determination method according to one of the preceding claims, further comprising the step of determining the altitude of the sensor that has measured the highest temperature, and wherein the step of determining the cold pressure of the tyre takes this altitude into account.

5. System for determining the pressure in a mounted aircraft tyre, the system having

   - at least two temperature sensors installed inside the tyre, the sensors being positioned such that the angular distance between the two sensors is between 160 and 200 degrees,
   - a means for determining the pressure inside the tyre,
   - calculation means making it possible to determine, as a function of a temperature and a pressure, a cold pressure of the tyre.

6. Determination system according to Claim 5, wherein the means for determining the pressure is included in the group comprising: a pressure sensor installed in the tyre, a pressure sensor installed on the associated rim, or an external measuring device such as a manometer.

7. Determination system according to Claim 5 or 6, wherein the temperature sensors comprise accelerometers making it possible to determine the altitude of the sensor.

8. Determination system according to any one of Claims 5 to 7, further comprising means for determining the temperature of the brake associated with the tyre.

# [Fig 1]

[Fig 2]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• WO 2019081746 A1